(19) Europäisches Patentamt
European Patent Office
Office européen des brevets

(11) **EP 3 729 167 B1**

(12) **FASCICULE DE BREVET EUROPEEN**

(45) Date de publication et mention
de la délivrance du brevet:
**26.01.2022 Bulletin 2022/04**

(21) Numéro de dépôt: **19708853.7**

(22) Date de dépôt: **05.03.2019**

(51) Classification Internationale des Brevets (IPC):
*G02B 27/00* (2006.01)   *H04N 13/30* (2018.01)
*G03H 1/26* (2006.01)   *B42D 25/435* (2014.01)
*B41M 5/26* (2006.01)   *B41M 3/14* (2006.01)
*B42D 25/373* (2014.01)   *H04N 13/324* (2018.01)

(52) Classification Coopérative des Brevets (CPC):
**B42D 25/435; B41M 3/14; B42D 25/373**

(86) Numéro de dépôt international:
**PCT/EP2019/055455**

(87) Numéro de publication internationale:
**WO 2019/170679 (12.09.2019 Gazette 2019/37)**

(54) **PROCÉDÉ DE CONSTRUCTION D'UNE IMAGE DE SÉCURITÉ PAR MULTIPLEXAGE D'IMAGES EN COULEURS**

VERFAHREN ZUR ERSTELLUNG EINES SICHERHEITSBILDES DURCH MULTIPLEXIERUNG VON FARBBILDERN

METHOD FOR BUILDING A SECURITY IMAGE BY MULTIPLEXING COLOR IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2018 FR 1851892**

(43) Date de publication de la demande:
**28.10.2020 Bulletin 2020/44**

(73) Titulaires:
• **HID Global CID SAS**
  **92150 Suresnes (FR)**
• **Université Jean Monnet Saint Etienne**
  **42100 Saint Etienne (FR)**
• **Centre National de la Recherche Scientifique**
  **75016 Paris (FR)**

(72) Inventeurs:
• **VANGHELUWE, Marie**
  **06110 Le Cannet (FR)**
• **VERMEULIN, Alice**
  **75015 Paris (FR)**
• **DESTOUCHES, Nathalie**
  **42000 Saint-Etienne (FR)**
• **HÉBERT, Mathieu**
  **69001 Lyon (FR)**

(74) Mandataire: **Kramer Barske Schmidtchen Patentanwälte PartG mbB**
**European Patent Attorneys**
**Landsberger Strasse 300**
**80687 München (DE)**

(56) Documents cités:
**FR-A1- 2 921 012   FR-A1- 2 997 964**
**US-A- 5 692 226**

**Description**

L'invention concerne les structures de sécurité utilisées pour sécuriser divers documents contre des tentatives de falsification ou de contrefaçon, ainsi que les structures de sécurité utilisées pour l'identification et l'authentification de divers documents, et les éléments de sécurité incorporant de telles structures, ces éléments de sécurité étant destinés à être intégrés dans des documents, et les documents ainsi sécurisés en tant que tels.

L'invention concerne plus particulièrement un procédé de multiplexage d'images en couleurs.

On entend par multiplexage le fait de combiner plusieurs images dans une même zone afin de pouvoir afficher alternativement différentes images en couleurs dans cette zone en fonction des conditions d'illumination et d'observation de cette zone. De telles images peuvent être réalisées par des techniques de marquage, de dépôt ou d'impression qui permettent de colorer des supports en leur conférant la propriété particulière d'apparaître sous des couleurs différentes selon les conditions d'illumination et d'observation mises en oeuvre pour les observer, et ce en chaque point. Les images sont composées de différentes zones inscrites par la technique de marquage, de dépôt ou d'impression et certaines zones, appelées « zones homogènes », et sont ainsi caractérisées non par une seule couleur mais par un ensemble de couleurs. Ces couleurs sont mesurées dans chacun des modes d'illumination et d'observation choisis.

Il a déjà été proposé de stocker des données 3D par modification sous laser femtoseconde de matrice de verre de phosphate dopée en ions argent. Les images sont gravées dans des plans superposés de l'échantillon et sont codées en niveaux de gris. L'échelle de gris est obtenue en modifiant l'intensité de fluorescence des clusters d'argent générés pas interaction laser. Cependant, les images affichées ne sont pas en couleurs et uniquement observables par microscopie de fluorescence. De plus, les images sont dans des plans différents et non dans un même plan.

On connaît également une méthode de stockage de données par modification de nano-bâtonnets d'or par laser femtoseconde permettant d'obtenir des images pseudoholographiques visibles sous différents angles (EP 1 949 185). Des images sont enregistrées dans des plans différents, mais au sein de chaque plan 6 images différentes peuvent être encodées. Pour visualiser une des six images encodées dans un plan on utilise un couple {longueur d'onde, polarisation} donné. Cependant, ces images sont observables par microscopie de fluorescence d'excitation, sont essentiellement binaires (noir + 1 couleur) et ont nécessairement la couleur de la longueur d'onde utilisée (pas de réelle information multicolore).

On connaît également différents procédés, comme par exemple l'impression sur support métallique, les procédés CLI/MLI (pour « *Changeable Laser Image* » et *« Multiple Laser Image »*) ou encore l'holographie permettant d'afficher plusieurs images différentes en fonction des conditions d'illumination et d'observation. Cependant, le nombre d'images est souvent limité à deux images, images en noir et blanc pour les techniques CLI/MLI, ou des images très fortement corrélées concernant l'impression sur support métallique. Par ailleurs, ces procédés nécessitent généralement soit un système de filtrage spatial comme par exemple un réseau de lentilles utilisé dans le cas des procédés CLI/MLI (dans ce cas les images sont entrelacées), soit de modifier la structure du support comme par exemple par embossage pour un procédé holographique.

Enfin, les éléments de sécurité sensibles à la polarisation de la lumière permettent d'afficher plusieurs images en fonction des conditions d'illumination et d'observation. Cependant, le nombre d'images et de couleurs est limité et les images ne sont en général observables, respectivement, que selon 2 types de polarisation, 2 angles d'observation ou 2 longueurs d'onde distinctes infrarouge et ultraviolette.

FR 2 921 012 A1 concerne un procédé et un dispositif de marquage d'une surface par nanostructures périodiques contrôiées.

Un but de l'invention est de remédier aux inconvénients précités en fournissant un procédé permettant d'obtenir un nombre d'images affichables plus important, images en couleurs et nettement différentes, voire tout à fait différentes les unes des autres.

L'invention a pour objet un procédé de construction d'au moins une image de sécurité pour une structure de sécurité d'un document de sécurité issue du multiplexage d'images en couleurs, le procédé comprenant les étapes suivantes :

- sélection d'une méthode de marquage apte à produire sur le document de sécurité des ensembles de couleurs comprenant différentes couleurs affichables en fonction de modes d'illumination et d'observation de la structure de sécurité, puis, par exemple au moyen d'un calculateur,
- établissement par mesure physique de plusieurs ensembles de couleurs affichables par la structure de sécurité dans différents modes d'illumination et d'observation.
- répartition d'ensembles de couleurs, comprenant les différentes couleurs produites par la technique de marquage, en plusieurs groupes d'ensembles de couleurs, lesdites différentes couleurs étant mesurées,
- établissement de combinaisons de groupes d'ensembles de couleurs possédant au moins un ensemble de couleurs en commun en fonction du nombre de modes d'illumination et d'observation différents et du nombre de couleurs par image,

**EP 3 729 167 B1**

- sélection (12) d'une combinaison d'un groupe d'ensembles de couleurs en fonction du nombre de modes d'illumination et d'observation souhaités et du nombre de couleurs par image, et
- détermination des images à multiplexer au moyen de la combinaison du groupe d'ensembles de couleurs sélectionnée.

Ainsi, le procédé selon l'invention permet d'optimiser le nombre d'images affichables dans une même structure de sécurité en déterminant un ensemble de combinaisons de groupes d'ensembles de couleurs pouvant être utilisés en fonction du nombre d'images à multiplexer et du nombre de couleurs souhaitées par images. Il est dès lors possible d'obtenir et d'afficher un certain nombre d'images distinctes en couleurs importants, images comprenant des couleurs permettant de facilement les différencier les unes des autres. En d'autres termes, le procédé selon l'invention permet de maximiser le nombre d'images pouvant être affichées à partir d'un nombre d'ensembles de couleurs déterminé.

Le procédé selon l'invention peut comprendre une ou plusieurs des caractéristiques suivantes :

- l'étape de détermination des images à multiplexer au moyen de la combinaison du groupe d'ensembles de couleurs sélectionnée comprend des étapes de construction d'une table d'ensembles de couleurs à partir de la combinaison du groupe d'ensembles de couleurs sélectionnée, de détermination des images à multiplexer à partir de la table d'ensembles de couleurs et de réalisation des images multiplexées au moyen de la table d'ensembles de couleurs ;
- un affichage des différentes images multiplexées est indépendant de tout système de filtrage spatial, et une résolution des images observées est la même que celle du marquage, d'un dépôt ou d'une impression ;
- l'étape de répartition des ensembles de couleurs comprend au moins une des étapes suivantes :

  • détermination des ensembles de couleurs comprenant des couleurs observables dans les mêmes modes d'illumination et d'observation dont la différence entre elles est inférieure à un seuil déterminé,
  • création de nouveaux ensembles de couleurs, et
  • détermination des ensembles de couleurs comprenant des couleurs identiques dans les mêmes modes d'illumination et d'observation.

- l'étape de détermination des ensembles de couleurs comprenant des couleurs observables dans les mêmes modes d'illumination et d'observation dont la différence entre elles est inférieure à un seuil déterminé comprend la répétition des étapes suivantes :

  • détermination d'une couleur référence présente dans un premier ensemble de couleurs et dans un mode d'illumination et d'observation donné,
  • comparaison entre la couleur référence et une seconde couleur d'un second ensemble de couleurs, la seconde couleur étant observable dans le même mode d'illumination et d'observation que la couleur référence, et
  • ajout de la seconde couleur à l'ensemble de couleurs associé à la couleur de référence pour le mode d'illumination et d'observation sélectionné lorsque la différence entre les deux couleurs est inférieure au seuil déterminé ;

- le procédé comprend, après l'étape de répartition d'ensembles de couleurs en groupes d'ensembles de couleurs, une étape de sélection des groupes d'ensembles de couleurs ne comportant, dans chaque mode d'illumination et d'observation, aucun ensemble de couleurs en commun ;
- l'étape de sélection des groupes d'ensembles de couleurs est réalisée par itération des étapes suivantes :

  • sélection du groupe d'ensembles de couleurs possédant le plus grand nombre d'ensembles de couleurs pour chaque mode d'illumination et d'observation, et
  • suppression de tous les groupes d'ensembles de couleurs possédant des ensembles de couleurs déjà présents dans le groupe possédant le plus grand nombre d'ensembles de couleurs.

En cas de présence de groupes d'ensembles de couleurs de même taille lors de la sélection, on applique la procédure à chaque groupe d'ensembles de couleurs en la décuplant à chaque fois que nécessaire ce qui amènera à produire plusieurs sélections différentes de groupes d'ensembles de couleurs.

- l'étape d'établissement de combinaisons de groupes d'ensembles de couleurs possédant au moins un ensemble de couleurs en commun est effectuée pour chaque sélection de groupe d'ensembles de couleurs sélectionné au travers de tous les modes d'illumination et d'observation ;
- l'étape d'établissement de combinaison de groupes d'ensembles de couleurs possédant au moins un ensemble de couleurs en commun comprend les étapes suivantes :

- détermination de toutes les combinaisons de groupes d'ensembles de couleurs existantes entre les groupes d'ensembles de couleurs issues de toutes les sélections de groupes d'ensembles de couleurs possibles, et
- suppression, pour chaque mode d'illumination et d'observation, des combinaisons de groupes d'ensembles de couleurs impliquant un nombre d'ensembles de couleurs strictement inférieur à $\Pi_{q=1:K-1}\, c_q$, $C_q$ étant le nombre de groupes d'ensembles de couleurs pour un mode d'illumination et d'observation q, K-1 étant l'ensemble complet des modes d'illumination et d'observation excepté le mode d'illumination et d'observation traité ;

- le procédé comprend, pour les combinaisons de groupes d'ensembles de couleurs impliquant un nombre d'ensembles de couleurs strictement supérieur à $\Pi_{q=1:K-1}\, C_q$, les étapes suivantes :

  - recherche de sous-groupes d'ensembles de couleurs appartenant au même groupe d'ensemble de couleurs dans chaque mode d'illumination et d'observation,
  - sélection d'un sous-groupe, de préférence celui ayant un écart de couleur moyen à la couleur de référence le plus bas pour chaque mode d'illumination et d'observation, et
  - sauvegarde des autres sous-groupes d'ensembles de couleurs.

- la technique de marquage est une structuration par laser d'une couche contenant des nanoparticules métalliques.

L'invention concerne également un procédé de marquage d'une structure de sécurité, dans laquelle on utilise une méthode de marquage apte à afficher des couleurs différentes, sur la structure de sécurité, en fonction de différents modes d'illumination et d'observation de la structure de sécurité, le procédé de marquage comprenant, en amont d'une étape de marquage de la structure de sécurité, un procédé de construction selon l'invention.

On prévoit également selon l'invention un programme d'ordinateur comprenant des instructions aptes à commander l'exécution du procédé selon l'invention lorsqu'il est exécuté sur un ordinateur.

On prévoit également selon l'invention un support d'enregistrement lisible par un ordinateur sur lequel est enregistré un programme d'ordinateur comprenant des instructions de code de programme pour l'exécution des étapes du procédé selon l'invention.

Nous allons maintenant présenter un mode de réalisation de l'invention donné à titre d'exemple non limitatif et à l'appui des figures annexées sur lesquelles :

- la figure 1 est un ordinogramme des étapes du procédé de construction d'une image de sécurité selon l'invention, et
- la figure 2 est un exemple d'une table d'ensembles de couleurs comprenant chacun cinq couleurs différentes selon cinq conditions d'illumination et d'observation différentes et de cinq images pouvant être réalisées à partir de cette table.

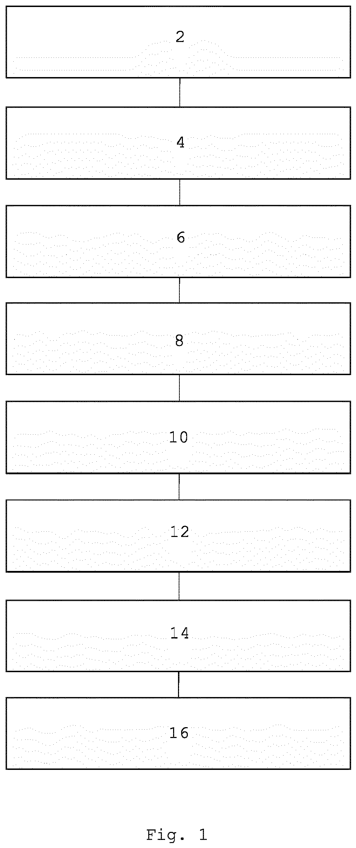

La figure 1 représente un ordinogramme du procédé de construction d'une image de sécurité selon l'invention.

Comme expliqué auparavant, on entend par multiplexage d'images la manière dont on peut sélectionner et combiner spatialement sur un support des ensembles de couleurs produits par une technologie de marquage, de dépôt ou d'impression choisie pour que la zone marquée ou imprimée du support affiche au même endroit des images distinctes en l'observant dans différents modes (ou conditions) d'observation et d'illumination. La visualisation des différentes images encodées sur le support pourrait également se faire par projection de la surface du support sur des écrans, les conditions de projection mises en oeuvre comptant ainsi parmi les modes possibles d'illumination et d'observation.

Un mode d'illumination et d'observation est défini par divers paramètres optogéométriques qui caractérisent les conditions d'illumination et d'observation du support. Les paramètres qui caractérisent l'illumination sont essentiellement : le spectre de la source de lumière, la divergence de la source, son angle d'incidence ou sa position par rapport à l'échantillon, sa polarisation. Les paramètres d'observation sont essentiellement : la réponse spectrale du détecteur (le détecteur peut être le système visuel humain ou un détecteur physique), l'angle d'observation ou sa position par rapport à l'échantillon, la polarisation de la lumière admise à entrer dans le détecteur. On peut donner à titre d'exemple les modes d'illumination et d'observation ci-dessous :

- mode 1 : observation en transmission avec une lumière blanche non polarisée,
- mode 2 : observation en réflexion spéculaire avec une lumière blanche non polarisée,
- mode 3 : observation en transmission avec une lumière blanche polarisée linéairement.

On entend par « hypercouleur » un ensemble de couleurs caractérisant une zone de la structure de sécurité, cette zone étant apte à afficher une couleur différente parmi cet ensemble de couleurs en fonction des conditions (ou modes) d'illumination et d'observation. Le terme hypercouleur sera utilisé par la suite pour décrire cet ensemble de couleurs. L'hypercouleur est « agencée » sur la structure de sécurité dans une zone marquée par la méthode de marquage et l'hypercouleur dans cette zone est choisie pour afficher des couleurs différentes dans chacune des conditions d'illumination et d'observation envisagées.

Une image multiplexée est une série d'images que l'on peut observer successivement dans une même zone d'un support lorsque l'on change les modes d'illumination et d'observation. L'image encodée à partir de ces images multiplexées est marquée, déposée ou imprimée sur le support par exemple point par point. Chaque point contient une hypercouleur qui change de couleur selon le mode d'illumination et d'observation considéré. La manière d'afficher les images dans les différentes conditions d'illumination et d'observation peut se passer de tout système de filtrage spatial comme par exemple un réseau de lentilles utilisé dans les procédés CLI/MLI (« *Changeable Laser Image* » et « *Multiple Laser Image* »), et peut aussi se passer de toute modification du support comme par exemple un embossage pour un procédé holographique. Ainsi la résolution des images observées peut être la même que celle du marquage, du dépôt ou de l'impression.

Ces hypercouleurs et ces modes d'illumination et d'observation, modes pouvant être qualifiés de « modes utiles », pourront être utilisés pour :

- afficher des images totalement différentes les unes des autres dans des modes d'illumination et d'observation différents ; on parlera alors d'hypercouleurs et de modes d'illumination et d'observation primaires, ou indépendants ;
- afficher des images différentes, mais non indépendantes (ayant une partie en commun), dans des modes d'illumination et d'observation différents. Il s'agit là d'ajouter des informations dans une image déjà présente dans un autre mode d'illumination et d'observation. On parlera alors d'hypercouleurs et de modes d'illumination et d'observation secondaires.

L'invention décrit un procédé mis en oeuvre pour identifier, au sein de l'ensemble des hypercouleurs produites par une technique de marquage, de dépôt ou d'impression, et un processus de mesure optique, les hypercouleurs qui présentent des concordances (une concordance étant un groupe d'hypercouleurs présentant sensiblement la même couleur dans un mode d'illumination et d'observation donné), et les modes d'illumination et d'observation associés à ces concordances, qui pourront être utilisés pour produire des images multiplexées.

Le procédé de multiplexage peut être expliqué avec un exemple simple de deux hypercouleurs comprenant chacune deux couleurs. On utilise dans cet exemple deux modes d'illumination et d'observation, par exemple une observation en transmission en incidence normale avec une source de lumière blanche polarisée (comme un écran d'ordinateur portable ou un autre type de décodeur). Dans le mode 1 la polarisation est à 45° de l'horizontale, dans le mode 2 elle est horizontale.

La première hypercouleur affiche deux fois la même couleur, par exemple du bleu. La seconde hypercouleur affiche deux couleurs différentes, par exemple le même bleu que celui de la première hypercouleur et un gris.

Selon le premier mode d'illumination et d'observation, la première et la seconde hypercouleurs affichent le même bleu mais selon le second mode d'illumination et d'observation, la première hypercouleur affiche du bleu et la seconde du gris. Dès lors, il est possible d'afficher dans le second mode un motif gris sur fond bleu. Pour cela, il faut déterminer où, sur le support, doivent se situer les zones comprenant la première hypercouleur et les zones comprenant la seconde. Il suffit dès lors de paramétrer le dispositif de marquage afin que ce dernier modifie le support afin qu'il soit apte à afficher les couleurs comme décrit auparavant. En d'autres termes, certaines zones de la structure de sécurité seront aptes à afficher les deux couleurs de la première hypercouleur et d'autres zones seront aptes à afficher les deux couleurs de la seconde hypercouleur. Il est intéressant de noter à ce stade que deux couleurs de deux hypercouleurs observables dans les mêmes conditions d'illumination et d'observation peuvent être identiques ou être concordantes, c'est-à-dire être similaires à une tolérance près (i.e. la différence entre elles est inférieure à une valeur seuil).

Avant tout autre chose, il convient de déterminer la technique de marquage qui sera mise en oeuvre pour réaliser une structure de sécurité comprenant une image multiplexée déterminée selon le présent procédé. Comme dit plus haut, ce procédé peut être une technologie de marquage, de dépôt ou d'impression. Il peut par exemple s'agir d'une technique de marquage par laser consistant à nanostructurer un film nanocomposite $Ag : TiO_2$ déposé sur un substrat de verre en balayant sa surface avec un faisceau laser légèrement focalisé et émettant dans le visible (voir FR 2 997 964 au nom de la demanderesse). Le contrôle des conditions d'irradiation laser permet de générer des nanostructures uniques caractérisées par diverses propriétés telles que la distribution de taille des nanoparticules métalliques, le degré d'organisation des nanoparticules, la période moyenne du réseau de nanoparticules (si existant), l'épaisseur du film contenant les nanoparticules, sa nature, sa densité et la position des nanoparticules dans ce film. Les paramètres de ces nanostructures sont contrôlés par un ensemble de paramètres d'écriture laser qui regroupe la longueur d'onde, la puissance crête, la durée d'impulsion, le taux de répétition, la taille du faisceau sur l'échantillon, l'état de polarisation du faisceau incident et son orientation, la vitesse d'écriture (ou nombre d'impulsions accumulées par ligne), le taux de recouvrement entre les lignes. Pour un ensemble de paramètres laser donné, les propriétés des nanostructures produites dépendent également des propriétés initiales du film et du support. En faisant varier certains paramètres d'écriture tels que la vitesse de balayage, l'intensité lumineuse ou encore la polarisation du laser, il est possible de marquer les différentes zones du film afin que ces zones aient la propriété d'afficher des hypercouleurs différentes c'est-à-dire des couleurs différentes en fonction des modes d'illumination et d'observation choisis. Le procédé selon l'invention sera décrit en prenant pour exemple ce procédé de marquage.

Alternativement, selon l'invention la technique de marquage mise en oeuvre peut également consister en un marquage non pas en surface mais dans la masse du matériau.

La technique de marquage sélectionnée permet de réaliser un nombre connu d'hypercouleurs comprenant des couleurs observables dans un nombre lui aussi connu de modes d'illumination et d'observation.

Le procédé de sélection des hypercouleurs et modes utiles pour le multiplexage d'images en couleur part du principe que l'on dispose d'un ensemble $\Pi = \{p_z\}$ d'hypercouleurs $p_z$ qui ont été mesurées dans $M$ modes d'illumination et d'observation différents. L'hypercouleur $p_z$ correspond à l'ensemble des couleurs $c_{zm}$ mesurées dans les modes m d'observation et d'illumination choisis par l'utilisateur.

Chaque couleur $c_{zm}$ est caractérisée par ses coordonnées colorimétriques dans un espace choisi, par exemple les valeurs [R G B] données par un système de détection. L'ensemble des hypercouleurs mesurées est numérisé et arrangé sous la forme d'une table de couleurs D dans laquelle chaque couleur est caractérisée par ses coordonnées colorimétriques. Chaque ligne de la table correspond à une hypercouleur, chaque colonne à un mode d'illumination et d'observation. La table contient les couleurs $c_{zm}$.

Parmi les couleurs mesurées, certaines peuvent être utilisées pour réaliser du multiplexage d'images couleurs. La première partie du procédé vise à trouver au sein de la table D les hypercouleurs et les modes d'illumination et d'observation dits indépendants (ou primaires), c'est-à-dire qui pourront être utilisés pour le multiplexage d'images couleurs différentes.

Il faut commencer par identifier au sein de chaque mode d'illumination et d'observation les couleurs que l'on peut considérer comme similaires et que l'on regroupera dans ce qu'on appelle une concordance (ou groupe d'ensembles de couleurs) (étape 2 de la figure 1).

Une concordance est caractérisée par une couleur c et regroupe les hypercouleurs $p_z$ dont la couleur dans le mode d'illumination et d'observation m considéré est égale à c à la tolérance $t$ près. On appelle $\Psi_{c,m}$ la concordance correspondante.

On considère que deux couleurs $c_1$ et $c_2$ sont concordantes lorsque l'écart entre les deux couleurs est inférieur à la tolérance t que l'on s'est fixée.

Si les couleurs sont représentées dans un espace colorimétrique uniforme, tel que l'espace CIE 1976 L*a*b*, on peut exprimer de préférence la tolérance t par une métrique colorimétrique telle que le ΔE*ab, le CIE 1994 DeltaE, ou le CIE DE2000.

La définition de CIE 1976 a été étendue afin de corriger les non-uniformités de la perception par l'œil humain en introduisant des facteurs de pondérations. Les formules de 1994 et 2000 ont succédé à celle de 1976. Le $\Delta E^*g_4$ est défini notamment dans l'espace L*C*h* utilisant les écarts de luminosité (L* « Lightness »), de saturation (C* « Chroma ») et de teinte (h* « hue ») calculés à partir des données colorimétriques L*a*b*. Etant données une couleur 1 (L*$_1$,a*$_1$,b*$_1$) et une autre couleur 2 (L*$_2$,a*$_2$,b*$_2$), la différence de couleur se calcule de la façon suivante :

$$\Delta E^*_{94} = \sqrt{\left(\frac{\Delta L^*}{k_L S_L}\right)^2 + \left(\frac{\Delta C^*_{ab}}{k_C S_C}\right)^2 + \left(\frac{\Delta H^*_{ab}}{k_H S_H}\right)^2} \text{ avec } \Delta L^* = L^*_1 - L^*_2$$

$$C^*_1 = \sqrt{a^{*2}_1 + b^{*2}_1} \text{ et } C^*_2 = \sqrt{a^{*2}_2 + b^{*2}_2}$$

$$\Delta C^*_{ab} = C^*_1 - C^*_2$$

$$\text{Et } \Delta H^*_{ab} = \sqrt{\Delta E^{*2}_{ab} - \Delta L^{*2} - \Delta C^{*2}_{ab}} = \sqrt{\Delta a^{*2} + \Delta b^{*2} - \Delta C^{*2}_{ab}}$$

avec

$$\Delta a^* = a^*_1 - a^*_2, \Delta b^* = b^*_1 - b^*_2$$

$$S_L = 1, S_C = 1 + K_1 C^*_1, S_H = 1 + K_2 C^*_1$$

$k_c$ et $k_H$ étant généralement égaux à 1 ; $k_L$, $K_1$ et $K_2$ dépendent de l'application.

$k_L$ = 1, $K_1$ = 0,045 et $K_2$ = 0,015 pour les arts graphiques.

Un ΔE (ΔE = 1) exprime la plus petite différence perçue entre deux couleurs par l'œil humain.

Si les couleurs correspondent aux valeurs RGB captées par un système d'imagerie en couleur, on peut exprimer la tolérance t par un écart maximum entre les valeurs dans chacun des canaux :

$$\begin{cases} |R_1 - R_2| < t \\ |G_1 - G_2| < t \\ |B_1 - B_2| < t \end{cases}$$

avec $R_1$, $G_1$ et $B_1$ correspondant aux valeurs de $c_1$ et $R_2$, $G_2$ et $B_2$ correspondant aux valeurs de $c_2$.

On peut aussi définir la tolérance en fonction des couleurs considérées par des fonctions paramétriques, pour distinguer par exemple les cas où les couleurs sont claires ou sombres :

$$\begin{cases} |R_1 - R_2| < t_R(R_1) \\ |G_1 - G_2| < t_G(G_1) \\ |B_1 - B_2| < t_B(B_1) \end{cases}$$

où $t_R$, $t_G$ et $t_B$ sont des fonctions continues.

Les couleurs RGB 24-bit sont définies par 256 nuances de rouge, vert et bleu, pour un total de $2^{24}$ ou $256^3$ couleurs. Les valeurs RGB peuvent par exemple varier entre 0 et 255, tout comme t.

Les couleurs satisfaisant la condition de similarité selon un des critères ci-dessus sont en pratique rarement strictement identiques. Il est alors possible, à partir de couleurs satisfaisant cette condition de similarité, de créer de nouvelles hypercouleurs que l'on ajoute à la table D initiale sous forme de nouvelles lignes. Pour ce faire, on procède par itération comme décrit ci-après (étape 4 de la figure 1).

Pour chacun des modes d'illumination et d'observation m, chaque couleur $c_{zm}$ affichable dans ce mode est successivement prise comme référence et comparée à toutes les autres couleurs du mode (présentes dans les autres hypercouleurs). Lorsqu'une couleur $c_{z'm}$ est déclarée similaire à la couleur de référence $c_{zm}$, une nouvelle hypercouleur dite "fictive" peut être associée à l'hypercouleur originelle $p_{z'}$ peut être ajoutée à la matrice D et créée à partir des couleurs de l'hypercouleur $p_{z'}$ dans tous les modes d'illumination et d'observation sauf dans le mode d'illumination et d'observation m où sa couleur est fixée égale à la couleur de référence $c_{zm}$. Les nouvelles hypercouleurs produites peuvent être ajoutées au bas de la table initiale sous forme de lignes supplémentaires peuvent être utilisées comme nouvelles couleurs de référence lors de la recherche des couleurs identiques pour les modes d'illumination et d'observation suivants.

Lorsque la couleur $c_{z'm}$ utilisée ci-dessus sera prise comme référence lors d'une itération postérieure de la boucle dans le même mode m, elle sera identifiée comme étant similaire à la couleur $c_{zm}$ et cette fois une nouvelle hypercouleur fictive associée à l'hypercouleur originelle $p_z$ pourra être ajoutée à la table D. Une même hypercouleur peut donner naissance à plusieurs nouvelles hypercouleurs lorsque les couleurs au sein d'un mode varient avec des variations de couleurs inférieures à la tolérance choisie.

On peut ainsi générer une nouvelle table de couleurs D' comprenant un nombre de lignes supérieur ou égal à celui de la table D. Les nouvelles hypercouleurs générées restent associées aux hypercouleurs initiales leur ayant donné naissance.

Les différentes concordances $\Psi_{c,m}$ issues de la table de données D' se construisent en regroupant les hypercouleurs $p_z$ ayant exactement la même couleur c au sein du mode m. On applique ici une tolérance t = 0 (étape 6 de la figure 1).

Ensuite, on remplace dans les concordances créées toutes les hypercouleurs fictives par leur hypercouleur d'origine associée. La couleur de la concordance est celle de la couleur qui avait été prise comme référence pour générer toutes les hypercouleurs fictives de la concordance.

Les concordances utilisées par la suite ne contiennent que des hypercouleurs originelles, par opposition aux hypercouleurs fictives. Une hypercouleur originelle peut appartenir à plusieurs concordances. Le nombre de concordances dans chacun des modes d'illumination et d'observation est égal au nombre de couleurs originelles affichables dans ce mode, sauf si certaines couleurs originelles étaient strictement identiques (c'est-à-dire identiques avec une tolérance t = 0). Chaque concordance est une couleur qu'il est possible d'intégrer dans l'image à afficher dans le mode d'illumination et d'observation considéré.

Les concordances peuvent également être créées par des techniques de « clustering » (regroupement) de type c-mean ou k-mean que l'on trouve déjà codées dans des logiciels de type Matlab. Ces méthodes ne donneront pas nécessairement les mêmes concordances que la méthode précédente pour un ensemble donné d'hypercouleurs.

Une fois les différentes concordances (ou groupes d'hypercouleurs) obtenues, il est possible de rechercher les concordances possédant, transversalement à tous les modes d'illumination et d'observation, au moins une hypercouleur commune. Ces combinaisons sont appelées des arrangements.

On appellera un arrangement indépendant $A_K$, c'est-à-dire une combinaison de concordances $\Psi_{c,m}$ telle que le produit des nombres de concordances $|A_K|_q$ dans chacun des modes q considérés est égal au nombre d'hypercouleurs utiles $N_{Ak}$ présentes dans les concordances $N_{Ak} = \Pi_{q=1:K}|A_K|_q$. Pour définir un arrangement indépendant, considérons les paramètres suivants : nous souhaitons multiplexer $K$ images ($K \leq M$), c'est-à-dire utiliser $K$ modes d'illumination et d'observation parmi les $M$ disponibles, où chaque image contient $C_q$ couleurs, avec $1 \leq q \leq K$ et avec $C_q$ inférieur ou égal au nombre de concordances dans le mode d'illumination et d'observation q.

Les arrangements indépendants permettent de multiplexer des images indépendantes les unes des autres, c'est-à-dire des images dans lesquelles les motifs ou zones colorés ne sont pas corrélés spatialement avec ceux des autres images.

Nous cherchons à identifier tous les arrangements primaires possibles au sein de l'ensemble des concordances disponibles dans les modes.

Nous procédons par itération pour :

- sélectionner tous les ensembles possibles de K modes d'illumination et d'observation parmi M, pour tous les K variant de 2 à M ;
- dans un ensemble donné de K modes d'illumination et d'observation, sélectionner tous les ensembles possibles de nombre $C_q$ de concordances souhaitées par mode d'illumination et d'observation (nombre de couleurs par mode désiré) pour $1 \leq q \leq K$ et avec $C_q \leq$ nombre de concordances dans le mode q ;
- pour chaque ensemble donné de K modes d'illumination et d'observation parmi les M disponibles, et chaque ensemble donné de concordances par mode d'illumination et d'observation parmi celles disponibles, écrire tous les arrangements possibles parmi les arrangements trouvés (étape 8 sur la figure 1) et supprimer tous ceux :
- impliquant un nombre d'hypercouleurs strictement inférieur à $\Pi_{q=1:K}C_q$. Dans ce cas, nous n'avons pas toutes les combinaisons pour afficher plusieurs images sans modifier au moins une des images.
- impliquant au moins une hypercouleur identique dans deux concordances différentes (étape 10 sur la figure 1).

Les arrangements restants ont maintenant un nombre d'hypercouleurs supérieur ou égal à $\Pi_{q=1:K}C_q$. Au sein de tous ces arrangements, on recherche des sous-groupes d'hypercouleurs qui dans chaque mode d'illumination et d'observation appartiennent systématiquement à la même concordance. Si de tels hypercouleurs existent, on en garde une par sous-groupe, par exemple n'importe laquelle ou celle qui, pour chaque mode d'illumination et d'observation, a l'écart de couleur moyen à la couleur de référence le plus bas, et on sauvegarde les autres sous la forme d'hypercouleurs secondaires associées à une concordance pour chaque mode d'illumination et d'observation considéré, au sein d'un arrangement particulier. Une fois ces hypercouleurs retirées, on réapplique l'étape précédente de suppression d'arrangements.

Les arrangements ayant un nombre d'hypercouleurs égal à $\Pi_{q=1:K}C_q$ peuvent permettre d'encoder autant d'images indépendantes les unes des autres que de modes d'illumination et d'observation présents.

On peut aussi procéder de manière différente pour identifier les arrangements utiles pour le multiplexage en identifiant toutes les hypercouleurs associées à chacune des combinaisons possibles de $C_q$ couleurs dans les $K$ modes d'illumination et d'observation et en sélectionnant des arbres de combinaisons de couleurs complets.

Les arrangements trouvés tels que le nombre d'hypercouleurs est égal à $\Pi_{q=1:K}C_q$ sont des arrangements dits primaires. Les arrangements trouvés tels que le nombre d'hypercouleurs est supérieur à $\Pi_{q=1:K}C_q$ sont des arrangements où certaines hypercouleurs jouent le même rôle. Il faut alors créer tous les arrangements primaires possibles en ne gardant dans les concordances que les hypercouleurs nécessaires à l'obtention d'un arrangement utile (suppression des hypercouleurs redondantes). Les hypercouleurs redondantes sont sauvegardées dans une table d'hypercouleurs dites "réservoirs" et seront utilisées pour définir les arrangements secondaires plus tard qui permettront d'afficher d'autres images dans d'autres modes, images corrélées spatialement aux images primaires.

On obtient alors tous les arrangements primaires possibles permettant de définir toutes les manières réalisables de multiplexer $K$ images ayant chacune $C_q$ couleurs.

Certaines configurations correspondant à un nombre de modes d'illumination et d'observation donné et à des jeux particuliers de nombres de concordances par mode d'illumination et d'observation ne correspondant à aucun arrangement primaire trouvé à partir des hypercouleurs disponibles utiles, d'autres au contraire auront un grand nombre d'arrangements indépendants possibles. Il va donc falloir sélectionner les meilleurs arrangements parmi ceux trouvés pour chaque configuration.

Il est intéressant de noter que, pour pouvoir multiplexer $M$ images indépendantes sur M modes, il est nécessaire de trouver un nombre d'hypercouleurs au sein de chaque concordance $\Psi_{c,m}$ de l'arrangement égal au nombre d'hypercouleurs utiles dans l'arrangement divisé par le nombre de couleurs utilisées dans un mode m. Le nombre d'hypercouleurs utiles est quant à lui égal au produit du nombre de couleurs dans les différents modes. Les concordances qui contiennent des hypercouleurs identiques ne peuvent être utilisées au sein d'un même arrangement.

Lorsqu'une configuration correspondant à un nombre de modes d'illumination et d'observation donné et à un jeu particulier de nombres de concordances par mode d'illumination et d'observation présente plusieurs arrangements possibles, il est nécessaire de trouver parmi ceux-ci les plus pertinents (étape 12 sur la figure 1).

On classera les arrangements primaires en fonction de la distance (distance colorimétrique ou autre tolérance basée sur les valeurs RGB captées par un imageur en couleur) entre les couleurs des concordances dans chacun des modes.

On peut également envisager une solution pour déterminer les meilleurs arrangements possibles pour un nombre donné de modes d'illumination et d'observation parmi toutes les combinaisons de modes possibles et toutes les combinaisons de couleurs possibles au sein de ces modes, c'est-à-dire trouver un critère de classement pertinent des solutions trouvées auparavant qui sont très nombreuses quand le nombre de modes choisis parmi les modes disponibles est petit.

Selon la distribution spatiale des couleurs dans les images à multiplexer, il est possible que certaines hypercouleurs s'avèrent non nécessaires. Il est donc intéressant de déterminer ces hypercouleurs manquantes dans l'hyper-image (empilement des images à multiplexer selon une table à 3 dimensions) souhaitée par l'utilisateur. S'il y a des hypercouleurs inusitées dans l'hyper-image, déterminer les hypercouleurs inusitées dans les différents arrangements sélectionnés et ne garder que les arrangements qui permettent de supprimer les contraintes : ceux dont les hypercouleurs inusitées correspondent aux hypercouleurs inusitées de l'hyper-image de l'utilisateur. On peut alors considérer que l'on a un arrangement utile.

Une fois un arrangement utile sélectionné, le multiplexage de $K$ images ($K \le M$), à afficher dans $K$ modes parmi les M disponibles, contenant chacune $C_q$ couleurs pour $1 \le q \le K$ et avec $C_q \le$ nombre de concordances dans le mode q se construit en identifiant l'hypercouleur associée à la chaque pixel de l'hyper-image (étape 14 de la figure 1).

Notons que dans un arrangement utile, l'ensemble des hypercouleurs disponibles correspond à l'ensemble des combinaisons possibles des $C_q$ couleurs.

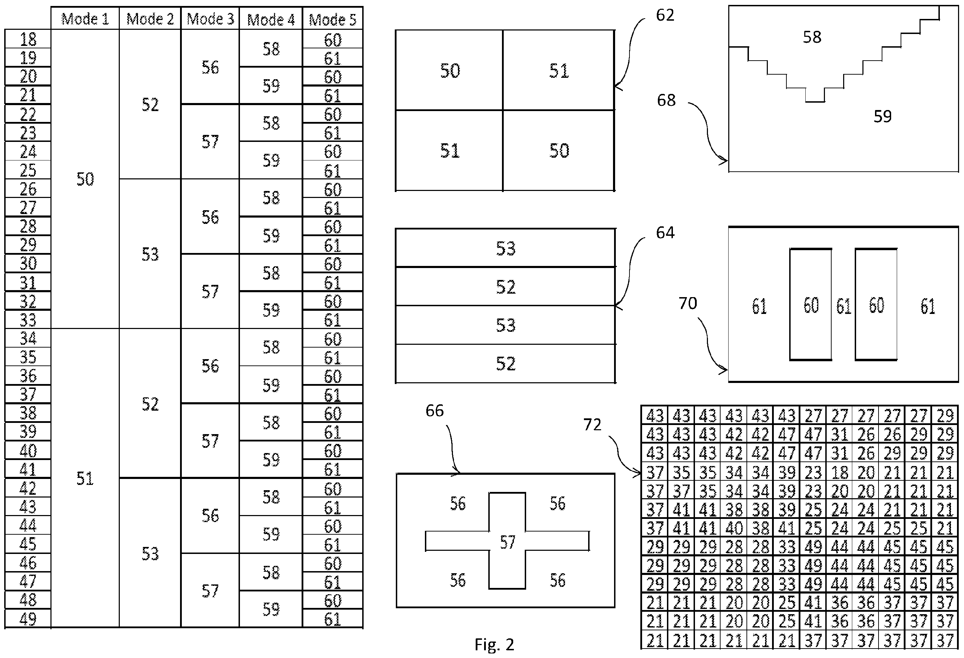

On peut prendre comme exemple la construction d'une table d'hypercouleurs permettant d'afficher cinq images 62, 64, 66, 68 et 70 à deux couleurs dans cinq modes différents, images affichables après construction de la matrice d'hypercouleurs 72. L'image 62 s'affiche par le biais du mode d'illumination et d'observation 1, l'image 64 s'affiche par le biais du mode d'illumination et d'observation 2, l'image 66 s'affiche par le biais du mode d'illumination et d'observation 3, l'image 68 s'affiche par le biais du mode d'illumination et d'observation 4 et l'image 70 s'affiche par le biais du mode d'illumination et d'observation 5. Il faut 32 hypercouleurs, visibles sur le tableau de gauche de la figure 2 (hypercouleurs 18 à 49), pour afficher les cinq images 62, 64, 66, 68 et 70. Les hypercouleurs 18 à 49 sont aptes à afficher les couleurs 50 à 61 en fonction des modes d'illumination et d'observation 1 à 5. En prenant l'exemple du mode 1, les hypercouleurs 18 à 33 affichent la couleur 50 et les hypercouleurs 34 à 49 affichent la couleur 51 dans les conditions d'illumination et d'observation du mode 1. Le même raisonnement s'applique aux modes 2 à 5 pour les couleurs 52 à 61 (pour les hypercouleurs correspondantes). La matrice 72 montre les hypercouleurs utilisées et leur disposition au niveau de la structure de sécurité pour obtenir les motifs des images 62 à 70 en fonction des modes d'illumination et d'observation 1 à 5.

On notera que dans cet exemple particulier, du fait de la forme des images 62 à 70, nous ne trouvons pas toutes les combinaisons possibles de couleurs. Par conséquent, toutes les hypercouleurs ne sont pas requises pour afficher correctement les 5 images. Les hypercouleurs 19, 22, 23, 30, 32, 33, 46 et 48 du tableau de gauche de la figure 2 ne sont pas utilisées.

Selon la technique de marquage, de dépôt ou d'impression utilisée, le multiplexage d'images totalement indépendantes (c'est-à-dire dont les couleurs et les formes dans chaque image peuvent être choisies indépendamment de celles des autres images) peut être complété par des images secondaires. Le nombre d'hypercouleurs nécessaires augmente en effet rapidement avec le nombre d'images à multiplexer et le nombre de couleurs utilisées dans chacune de ces images (dans l'exemple précédent, on a besoin de 32 hypercouleurs utiles sur 5 modes d'illumination et d'observation utiles si on veut afficher 5 images indépendantes à deux couleurs). S'il n'existe dans la technologie aucun arrangement indépendant présentant un nombre suffisant d'hypercouleurs utiles pour réaliser le multiplexage de M images à $C_q$ couleurs à afficher dans M modes d'illumination et d'observation, il est alors possible de prendre un des plus grands arrangements utiles disponibles afin de multiplexer seulement K (< M) images différentes à $C_q$ couleurs, arrangement pour lequel on avait sauvegardé des hypercouleurs "réservoirs" qui permettront ensuite d'afficher des images supplémentaires dépendant de ces K premières images (étape 16 de la figure 1).

La première étape consiste à générer une table de structuration, destinée à l'affichage des K premières images différentes les unes des autres et dites « prioritaires », images à $C_K$ couleurs affichables dans $K$ modes distincts. On peut ensuite constituer des arrangements secondaires pour les hypercouleurs réservoirs en considérant deux ou plusieurs modes en partie définis au sein des ($M - K$) autres modes d'illumination et d'observation restants. Pour ces modes d'illumination et d'observation secondaires, ces hypercouleurs réservoir deviennent utiles. L'un des modes d"illumination et d'observation alors utiles de ce nouvel arrangement considère obligatoirement une unique concordance pour chacun des K modes d'illumination et d'observation dont la couleur respective est forcément égale à celle de l'hypercouleur utile utilisée avec l'arrangement primaire. Les hypercouleurs réservoirs considérées constituent un arrangement utile sur d'autres modes définis au sein des (M - K) modes dans lequel l'hypercouleur utile et les hypercouleurs réservoirs ont des couleurs différentes. Cette méthode permet d'injecter de nouvelles informations dans la zone couverte par l'hypercouleur utile considérée pour concevoir l'arrangement utile secondaire. Les images affichées dans les nouveaux modes d'illumination et d'observation, dits « modes secondaires », ne seront donc pas totalement indépendantes des images encodées par l'arrangement utile primaire.

Cette opération peut être répétée pour chaque hypercouleur réservoir des arrangements primaires présentés précédemment. Il peut exister plusieurs modes d'illumination et d'observation dans lesquels les hypercouleurs réservoirs sélectionnées selon les arrangements secondaires choisis, peuvent afficher la même image, dans ce cas, ces modes ne sont pas tous utiles. Pour ajouter des images secondaires différentes dans des modes secondaires utiles, on peut associer les hypercouleurs réservoirs à des hypercouleurs utiles différentes.

L'utilisation adéquate des hypercouleurs réservoirs uniquement n'altère pas les modes primaires car leurs couleurs sont identiques dans les modes utiles à celles déjà sélectionnées pour construire la table de structuration initiale (permettant l'affichage des K premières images, toutes distinctes les unes des autres).

Ainsi, si on considère l'ajout d'un $(K+1)^{\text{ème}}$ mode d'illumination et d'observation aux K premiers modes d'illumination et d'observation, il est possible d'insérer des informations sur des zones spécifiques de la table de structuration, en ajoutant des fragments d'une image globale choisie, tel un filigrane, et appelée « données secondaires ».

De plus, on peut noter que certains modes secondaires peuvent ne présenter aucune possibilité d'information injectable (pas d'hypercouleurs divisibles dans ces modes), mais cependant le résultat final obtenu sera différent des modes primaires.

Après avoir déterminé une matrice d'hypercouleurs, il est possible de paramétrer un dispositif de marquage, comme celui cité plus haut, afin de modifier un substrat et créer un élément de sécurité apte à afficher n images multiplexées visibles selon n modes d'illumination et d'observation.

L'invention n'est pas limitée aux modes de réalisation présentés et d'autres modes de réalisation apparaîtront clairement à l'homme du métier, pour autant qu'ils soient couverts par la portée des revendications qui suivent.

Il est notamment possible d'appliquer l'inscription d'images couleurs multiplexées sur un support pour le stockage de données haute densité, la décoration d'objets de luxe, le design, etc.

**Revendications**

1. Procédé de construction d'au moins une image de sécurité pour une structure de sécurité d'un document de sécurité issue du multiplexage d'images (62, 64, 66, 68, 70) en couleurs, comprenant les étapes suivantes :

   - sélection d'une méthode de marquage apte à produire sur le document de sécurité des ensembles de couleurs comprenant différentes couleurs affichables en fonction de modes d'illumination et d'observation de la structure de sécurité, puis, par exemple au moyen d'un calculateur,
   - établissement par mesure physique de plusieurs ensembles de couleurs affichables par la structure de sécurité dans différents modes d'illumination et d'observation.
   - répartition d'ensembles de couleurs, comprenant les différentes couleurs produites par la technique de marquage, en plusieurs groupes d'ensembles de couleurs, lesdites différentes couleurs étant mesurées, ledit procédé étant **caractérisé en ce qu'**il comprend les étapes suivantes :
   - établissement de combinaisons de groupes d'ensembles de couleurs possédant au moins un ensemble de couleurs en commun en fonction du nombre de modes d'illumination et d'observation différents et du nombre de couleurs par image,
   - sélection (12) d'une combinaison d'un groupe d'ensembles de couleurs en fonction du nombre de modes d'illumination et d'observation souhaités et du nombre de couleurs par image, et détermination des images à multiplexer au moyen de la combinaison du groupe d'ensembles de couleurs sélectionnée.

2. Procédé de construction selon la revendication 1, dans lequel l'étape de détermination des images à multiplexer au moyen de la combinaison du groupe d'ensembles de couleurs sélectionnée comprend des étapes de construction (14) d'une table d'ensembles de couleurs à partir de la combinaison du groupe d'ensembles de couleurs sélectionnée, de détermination des images à multiplexer à partir de la table d'ensembles de couleurs et de réalisation des images multiplexées au moyen de la table d'ensembles de couleurs.

3. Procédé de construction selon l'une quelconque des revendications précédentes, dans lequel un affichage des différentes images multiplexées est indépendant de tout système de filtrage spatial, et une résolution des images observées est la même que celle du marquage, d'un dépôt ou d'une impression.

4. Procédé de construction selon l'une quelconque des revendications précédentes, dans lequel l'étape de répartition des ensembles de couleurs comprend au moins une des étapes suivantes :

- détermination (2) des ensembles de couleurs comprenant des couleurs observables dans les mêmes modes d'illumination et d'observation dont la différence entre elles est inférieure à un seuil déterminé,
- création (4) de nouveaux ensembles de couleurs, et
- détermination (6) des ensembles de couleurs comprenant des couleurs identiques dans les mêmes modes d'illumination et d'observation.

5. Procédé de construction selon la revendication précédente, dans lequel l'étape de détermination des ensembles de couleurs comprenant des couleurs observables dans les mêmes modes d'illumination et d'observation dont la différence entre elles est inférieure à un seuil déterminé comprend la répétition des étapes suivantes :

- détermination d'une couleur référence présente dans un premier ensemble de couleurs et dans un mode d'illumination et d'observation donné,
- comparaison entre la couleur référence et une seconde couleur d'un second ensemble de couleurs, la seconde couleur étant observable dans le même mode d'illumination et d'observation que la couleur référence, et
- ajout de la seconde couleur à l'ensemble de couleurs associé à la couleur de référence pour le mode d'illumination et d'observation sélectionné lorsque la différence entre les deux couleurs est inférieure au seuil déterminé.

6. Procédé de construction selon l'une quelconque des revendications précédentes comprenant, après l'étape de répartition d'ensembles de couleurs en groupes d'ensembles de couleurs, une étape de sélection des groupes d'ensembles de couleurs ne comportant, dans chaque mode d'illumination et d'observation, aucun ensemble de couleurs en commun.

7. Procédé de construction selon la revendication précédente, dans lequel l'étape de sélection des groupes d'ensembles de couleurs est réalisée par itération des étapes suivantes :

- sélection du groupe d'ensembles de couleurs possédant le plus grand nombre d'ensembles de couleurs pour chaque mode d'illumination et d'observation, et
- suppression de tous les groupes d'ensembles de couleurs possédant des ensembles de couleurs déjà présents dans le groupe possédant le plus grand nombre d'ensembles de couleurs.

8. Procédé de construction selon l'une quelconque des revendications 6 et 7, dans lequel l'étape d'établissement de combinaisons de groupes d'ensembles de couleurs possédant au moins un ensemble de couleurs en commun est effectuée pour chaque sélection de groupe d'ensembles de couleurs sélectionné au travers de tous les modes d'illumination et d'observation.

9. Procédé de construction selon la revendication précédente, dans lequel l'étape d'établissement de combinaison de groupes d'ensembles de couleurs possédant au moins un ensemble de couleurs en commun comprend les étapes suivantes :

- détermination de toutes les combinaisons de groupes d'ensembles de couleurs existantes entre les groupes d'ensembles de couleurs issues de toutes les sélections de groupes d'ensembles de couleurs possibles, et
- suppression, pour chaque mode d'illumination et d'observation, des combinaisons de groupes d'ensembles de couleurs impliquant un nombre d'ensembles de couleurs strictement inférieur à $\Pi_{q=1:K-1}\, C_q$, $C_q$ étant le nombre de groupes d'ensembles de couleurs pour un mode d'illumination et d'observation q, K-1 étant l'ensemble complet des modes d'illumination et d'observation excepté le mode d'illumination et d'observation traité.

10. Procédé de construction selon la revendication précédente comprenant, pour les combinaisons de groupes d'ensembles de couleurs impliquant un nombre d'ensembles de couleurs strictement supérieur à $\Pi_{q=1:K-1} C_q$, les étapes suivantes :

- recherche de sous-groupes d'ensembles de couleurs appartenant au même groupe d'ensemble de couleurs dans chaque mode d'illumination et d'observation,
- sélection d'un sous-groupe, de préférence celui ayant un écart de couleur moyen à la couleur de référence le plus bas pour chaque mode d'illumination et d'observation, et
- sauvegarde des autres sous-groupes d'ensembles de couleurs.

11. Procédé de construction selon l'une quelconque des revendications précédentes, dans lequel la technique de marquage est une structuration par laser d'une couche comprenant des nanoparticules métalliques.

12. Procédé de marquage d'une structure de sécurité, dans laquelle on utilise une méthode de marquage apte à afficher des couleurs différentes, sur la structure de sécurité, en fonction de différents modes d'illumination et d'observation de la structure de sécurité, le procédé de marquage comprenant, en amont d'une étape de marquage de la structure de sécurité, un procédé de construction selon l'une quelconque des revendications précédentes.

13. Programme d'ordinateur **caractérisé en ce qu'**il comprend des instructions aptes à commander l'exécution du procédé selon l'une quelconque des revendications précédentes lorsqu'il est exécuté sur un ordinateur.

14. Support d'enregistrement lisible par un ordinateur sur lequel est enregistré un programme d'ordinateur comprenant des instructions de code de programme pour l'exécution des étapes du procédé selon l'une quelconque des revendications 1 à 11.

**Patentansprüche**

1. Verfahren zum Herstellen mindestens eines Sicherheitsbilds für eine Sicherheitsstruktur eines Sicherheitsdokuments durch Multiplexen von Farbbildern (62, 64, 66, 68, 70), mit folgenden Schritten:

- Auswählen eines Markierverfahrens, das dazu in der Lage ist, auf dem Sicherheitsdokument Sätze von Farben mit unterschiedlichen Farben, die gemäß Beleuchtungs- und Betrachtungsmodi der Sicherheitsstruktur angezeigt werden können, zu erzeugen, beispielsweise dann mittels eines Rechners,
- Erhalten mehrerer Sätze von Farben, die durch die Sicherheitsstruktur unter unterschiedlichen Beleuchtungs- und Betrachtungsmodi angezeigt werden können, durch physikalische Messung,
- Aufteilen von Sätzen von Farben mit den unterschiedlichen Farben, die durch das Markierverfahren erzeugt werden, in mehrere Gruppen von Farbsätzen, wobei die unterschiedlichen Farben gemessen werden, **gekennzeichnet durch** die folgenden Schritte:
- Erhalten von Kombinationen von Gruppen von Farbsätzen mit mindestens einem Satz von Farben, der gemeinsam ist, gemäß der Anzahl von unterschiedlichen Beleuchtungs- und Betrachtungsmodi und der Anzahl von Farben pro Bild,
- Auswählen (12) einer Kombination einer Gruppe von Farbsätzen gemäß der Anzahl von gewünschten Beleuchtungs- und Betrachtungsmodi und der Anzahl von Farben pro Bild und
Bestimmen der Bilder, die zu Multiplexen sind, mittels der Kombination der Gruppe von Farbsätzen, die ausgewählt wurde.

2. Herstellungsverfahren nach Anspruch 1, bei dem der Schritt zum Bestimmen der Bilder, die zu Multiplexen sind, mittels der Kombination der Gruppe von Farbsätzen, die ausgewählt wurde, die Schritte Erstellen (14) einer Tabelle von Farbsätzen aus der Kombination der Gruppe von Farbsätzen, die ausgewählt wurde, Bestimmen der zu multiplexenden Bilder anhand der Tabelle von Farbsätzen und Erzeugen von gemultiplexten Bildern mittels der Tabelle von Farbsätzen beinhaltet.

3. Herstellungsverfahren nach einem der vorhergehenden Ansprüche, bei dem eine Anzeige von unterschiedlichen gemultiplexten Bildern unabhängig von einem räumlichen Filtersystem ist und eine Auflösung der Bilder, die betrachtet werden, dieselbe ist wie die für ein Markieren, eine Abscheidung oder ein Drucken.

4. Herstellungsverfahren nach einem der vorhergehenden Ansprüche, bei dem der Schritt zum Aufteilen von Farbsätzen mindestens einen der folgenden Schritte aufweist:

- Bestimmen (2) der Farbsätze mit Farben, die unter demselben Beleuchtungs-und Betrachtungsmodus, für den der Unterschied zwischen den Farben unterhalb einer gegebenen Schwelle liegt, betrachtet werden können,
- Erzeugen (4) von neuen Farbsätzen und

- Bestimmen (6) von Farbsätzen mit Farben, die unter denselben Beleuchtungs- und Betrachtungsmodi identisch sind.

5. Herstellungsverfahren nach dem vorhergehenden Anspruch, bei dem der Schritt zum Bestimmen der Farbsätze mit Farben, die unter denselben Beleuchtungs- und Betrachtungsmodi, für die der Unterschied zwischen den Farben unterhalb einer gegebenen Schwelle liegt, betrachtet werden können, das Wiederholen der folgenden Schritte aufweist:

- Bestimmen einer Bezugsfarbe, die in einem ersten Satz von Farben und unter einem gegebenen Beleuchtungs- und Betrachtungsmodus vorhanden ist,
- Vergleichen der Bezugsfarbe und einer zweiten Farbe aus einem zweiten Satz von Farben, wobei die zweite Farbe unter demselben Beleuchtungs- und Betrachtungsmodus wie die Bezugsfarbe betrachtet werden kann, und
- Hinzufügen der zweiten Farbe zu dem Satz von Farben, der der Bezugsfarbe zugeordnet ist, für den ausgewählten Beleuchtungs- und Betrachtungsmodus, wenn der Unterschied zwischen den zwei Farben unterhalb der gegebenen Schwelle liegt.

6. Herstellungsverfahren nach einem der vorhergehenden Ansprüche mit, nach dem Schritt zum Aufteilen von Farbsätzen in Gruppen von Farbsätzen, einem Schritt zum Auswählen der Gruppen von Farbsätzen, die in jedem Beleuchtungs- und Betrachtungsmodus keinen Satz von Farben gemeinsam haben.

7. Herstellungsverfahren nach dem vorhergehenden Anspruch, bei dem der Schritt zum Auswählen von Gruppen von Farbsätzen durch Iteration der folgenden Schritte ausgeführt wird:

- Auswählen der Gruppe von Farbsätzen mit der größten Anzahl von Farbsätzen für jeden Beleuchtungs- und Betrachtungsmodus und
- Eliminieren aller Gruppen von Farbsätzen mit Farbsätzen, die bereits in der Gruppe mit der größten Anzahl von Farbsätzen vorhanden sind.

8. Herstellungsverfahren nach Anspruch 6 oder Anspruch 7, bei dem der Schritt zum Erhalten von Kombinationen von Gruppen von Farbsätzen mit mindestens einem Satz von Farben, der gemeinsam ist, für jede Auswahl einer Gruppe von Farbsätzen, die ausgewählt wird, über alle Beleuchtungs-und Betrachtungsmodi ausgeführt wird.

9. Herstellungsverfahren nach dem vorhergehenden Anspruch, bei dem der Schritt zum Erhalten einer Kombination von Gruppen von Farbsätzen mit mindestens einem Satz von Farben, der gemeinsam ist, folgende Schritte aufweist:

- Bestimmen aller Kombinationen von Gruppen von Farbsätzen der Gruppen von Farbsätzen aus all den möglichen Auswahlmöglichkeiten von Gruppen von Farbsätzen und
- Eliminieren, für jeden Beleuchtungs- und Betrachtungsmodus, von Kombinationen von Gruppen von Farbsätzen, die eine Anzahl von Farbsätzen beinhalten, die streng kleiner als $\Pi_{q=1:K-1}\,Cq$, ist, wobei $Cq$ die Anzahl von Gruppen von Farbsätzen für einen Beleuchtungs- und Betrachtungsmodus q ist, K-1 die komplette Gruppe von Beleuchtungs- und Betrachtungsmodi, ausgenommen den fraglichen Beleuchtungs- und Betrachtungsmodus, ist.

10. Herstellungsverfahren nach dem vorhergehenden Anspruch mit, für die Kombinationen von Gruppen von Farbsätzen, die eine Anzahl von Farbsätzen beinhalten, die streng größer als $\Pi_{q=1:K-1}\,Cq$ ist, den folgenden Schritten:

- Suchen von Untergruppen von Farbsätzen, die zu derselben Gruppe von Farbsätzen in jedem Beleuchtungs- und Betrachtungsmodus gehören,
- Auswählen einer Untergruppe, bevorzugt derjenigen mit dem niedrigsten mittleren Farbunterschied zu der Bezugsfarbe für jeden Beleuchtungs- und Betrachtungsmodus und
- Speichern der anderen Untergruppen von Farbsätzen.

11. Herstellungsverfahren nach einem der vorhergehenden Ansprüche, bei dem das Markierverfahren ein Laserstrukturieren einer Schicht mit Metallnanopartikeln ist.

12. Verfahren zum Markieren einer Sicherheitsstruktur, wobei ein Markierverfahren verwendet wird, das geeignet zum Anzeigen unterschiedlicher Farben auf der Sicherheitsstruktur gemäß unterschiedlichen Beleuchtungs- und Betrachtungsmodi der Sicherheitsstruktur ist, wobei das Markierverfahren, vor einem Schritt zum Markieren der Sicherheitsstruktur, ein Herstellungsverfahren nach einem der vorhergehenden Ansprüche aufweist.

13. Computerprogramm, **dadurch gekennzeichnet, dass** es Anweisungen aufweist, die geeignet sind zum Steuern der Ausführung des Verfahrens nach einem der vorhergehenden Ansprüche, wenn das Programm auf einem Computer ausgeführt wird.

14. Computerlesbares Aufzeichnungsmedium, auf dem ein Computerprogramm mit Programmcodeanweisungen für die Ausführung der Schritte des Verfahrens nach einem der Ansprüche 1 bis 11 aufgezeichnet ist.

**Claims**

1. Method for building at least one security image for a security structure of a security document from the multiplexing of color images (62, 64, 66, 68, 70), the method comprising the following steps:

   - selecting a marking method capable of producing sets of colors on the security document comprising different colors that can be displayed according to illumination and observation modes of the security structure, then, for example by means of a calculator,
   - establishing a plurality of sets of colors by physical measurement that can be displayed by the security structure in different illumination and observation modes,
   - distributing sets of colors comprising the different colors produced by the marking technique, in a plurality of groups of color sets, said different colors being measured, the method being **characterized by** comprising the following steps:
   - establishing combinations of groups of color sets having at least one color set in common according to the number of different illumination and observation modes and the number of colors per image,
   - selecting (12) a combination of a group of color sets according to the number of desired illumination and observation modes and the number of colors per image, and
   determining the images to multiplex by means of the combination of the group of color sets selected.

2. Building method according to claim 1, wherein the step of determining the images to multiplex by means of the combination of the group of color sets selected comprises the steps of building (14) a table of color sets from the combination of the group of color sets selected, determining the images to multiplex from the table of color sets and producing multiplexed images by means of the table of color sets.

3. Building method according to any one of the preceding claims, wherein a display of different multiplexed images is independent of any spatial filtering system, and a resolution of the images observed is the same as that for marking, deposition or printing.

4. Building method according to any one of the preceding claims, wherein the step of distributing color sets comprises at least one of the following steps:

   - determining (2) the color sets comprising colors that can be observed in the same illumination and observation mode for which the difference between said colors is below a given threshold,
   - creating (4) new color sets, and
   - determining (6) color sets comprising colors that are identical in the same illumination and observation modes.

5. Building method according to the preceding claim, wherein the step of determining the color sets comprising colors that can be observed in the same illumination and observation modes for which the difference between said colors is below a given threshold comprises the repetition of the following steps:

   - determining a reference color present in a first color set and in a given illumination and observation mode,
   - comparing the reference color and a second color from a second color set, the second color being observable in the same illumination and observation mode as the reference color, and
   - adding the second color to the color set associated with the reference color for the selected illumination and observation mode if the difference between the two colors is below the given threshold.

6. Building method according to any one of the preceding claims comprising, following the step of distributing color sets into groups of color sets, a step of selecting the groups of color sets that do not comprise, in each illumination and observation mode, any color set in common.

7. Building method according to the preceding claim, wherein the step of selecting groups of color sets is carried out by iteration of the following steps:

   - selecting the group of color sets having the largest number of color sets for each illumination and observation mode, and
   - eliminating all the groups of color sets having color sets that are already present in the group having the largest number of color sets.

8. Building method according to either claim 6 or claim 7, wherein the step of establishing combinations of groups of color sets having at least one color set in common is carried out for each selection of a group of color sets selected through all the illumination and observation modes.

9. Building method according to the preceding claim, wherein the step of establishing a combination of groups of color sets having at least one color set in common comprises the following steps:

   - determining all the combinations of groups of color sets that exist among the groups of color sets from all the possible selections of groups of color sets, and
   - eliminating, for each illumination and observation mode, combinations of groups of color sets that involve a number of color sets that is strictly less than $\Pi_{q=1:K-1}\, C_q$, $C_q$ being the number of groups of color sets for an illumination and observation mode q, K-1 being the complete set of illumination and observation modes except for the illumination and observation mode in question.

10. Building method according to the preceding claim comprising, for the combinations of groups of color sets involving a number of color sets that is strictly greater than $\Pi_{q=1:K-1}\, C_q$, the following steps:

    - searching for sub-groups of color sets that belong to the same group of color sets in each illumination and observation mode,
    - selecting a sub-group, preferably the one with the lowest average color difference from the reference color for each illumination and observation mode, and
    - saving the other sub-groups of color sets.

11. Building method according to any one of the preceding claims, wherein the marking technique is laser structuring of a layer comprising metal nanoparticles.

12. Method of marking a security structure, wherein a marking method is used that is suitable for displaying different colors on the security structure according to different illumination and observation modes of the security structure, the marking method comprising, before a step of marking the security structure, a building method according to any one of the preceding claims.

13. Computer program **characterized in that** it comprises instructions suitable for controlling the execution of the method according to any one of the preceding claims when said program is executed on a computer.

14. Computer-readable recording support on which a computer program is recorded comprising program code instructions for the execution of the steps of the method according to any one of claims 1 to 11.

Fig. 1

| | Mode 1 | Mode 2 | Mode 3 | Mode 4 | Mode 5 |
|---|---|---|---|---|---|
| 18 | 50 | 52 | 56 | 58 | 60 |
| 19 | | | | | 61 |
| 20 | | | | 59 | 60 |
| 21 | | | | | 61 |
| 22 | | | 57 | 58 | 60 |
| 23 | | | | | 61 |
| 24 | | | | 59 | 60 |
| 25 | | | | | 61 |
| 26 | | 53 | 56 | 58 | 60 |
| 27 | | | | | 61 |
| 28 | | | | 59 | 60 |
| 29 | | | | | 61 |
| 30 | | | 57 | 58 | 60 |
| 31 | | | | | 61 |
| 32 | | | | 59 | 60 |
| 33 | | | | | 61 |
| 34 | 51 | 52 | 56 | 58 | 60 |
| 35 | | | | | 61 |
| 36 | | | | 59 | 60 |
| 37 | | | | | 61 |
| 38 | | | 57 | 58 | 60 |
| 39 | | | | | 61 |
| 40 | | | | 59 | 60 |
| 41 | | | | | 61 |
| 42 | | 53 | 56 | 58 | 60 |
| 43 | | | | | 61 |
| 44 | | | | 59 | 60 |
| 45 | | | | | 61 |
| 46 | | | 57 | 58 | 60 |
| 47 | | | | | 61 |
| 48 | | | | 59 | 60 |
| 49 | | | | | 61 |

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1949185 A
- FR 2921012 A1
- FR 2997964